# DEMANDE DE BREVET EUROPEEN

(11) **EP 0 971 438 A1**
(43) Date de publication de la demande: **12.01.2000**
(21) Numéro de dépôt: 99460042.7
(22) Date de dépôt: 18.06.1999
(51) Int. Cl.: H01Q 3/26, H04Q 7/36

(54) **Procédé d'orientation de faisceau(x) rayonnant(s) radioélectrique(s) pour la communication entre une station de base et un radiotéléphone mobile, et station de base correspondante**

(30) Priorité: 06.07.1998 FR 9808782
(71) Demandeur: Societé Francaise du Radiotéléphone SRF, 92915 Paris la Défence (FR)
(72) Inventeur: Rémy, Jean-Gabriel, 94170 Le Perreux (FR)
(74) Mandataire: Vidon, Patrice

(57) **Abrégé**

L'invention concerne un procédé d'orientation de faisceau(x) rayonnant(s) radioélectrique(s) pour la communication entre une station de base et un radiotéléphone mobile, du type mettant en oeuvre une antenne de la station de base comprenant un réseau d'éléments rayonnants répartis matriciellement sur un support.

Selon l'invention, le procédé comprend les étapes successives suivantes :
- la station de base effectue une identification (1) de la position du mobile ;
- en fonction de l'identification précitée, la station de base oriente (2) un faisceau de réception formé par ladite antenne, l'orientation dudit faisceau de réception étant réalisée à la fois en site et en azimut, au moyen d'une action sur les paramètres de réception de chacun des éléments rayonnants, différemment l'un par rapport à l'autre.

## Description

Le domaine de l'invention est celui des systèmes de radiocommunication numériques cellulaires mettant en oeuvre la technique de multiplexage spatial (ou SDMA, pour "Spatial Division Multiple Access" en anglais).

L'invention s'applique donc notamment, mais non exclusivement, aux systèmes UMTS (pour "Universal Mobile Telephone System - 2 GHz" en anglais), GSM 900 (pour "Global System for Mobile - 900 Mhz" en anglais), DCS 1800 (pour "Digital Cellular System - 1800 Mhz" en anglais), PCS 1900 (pour "Personal Communication System - 1900 MHz" en anglais), etc.

Plus précisément, la présente invention concerne un procédé d'orientation de faisceau(x) rayonnant(s) radioélectrique(s) pour la communication entre une station de base et un radiotéléphone mobile (parfois aussi appelé mobile dans la suite de la présente description).

Dans la suite de la présente description, on utilise indifféremment les expressions "orientation du faisceau rayonnant radioélectrique formé par l'antenne" et "adaptation du diagramme d'antenne".

D'une façon générale, un système de radiocommunication numérique cellulaire comprend une pluralité de stations de base, chacune assurant la couverture radio d'une cellule géographique distincte et pouvant communiquer avec une pluralité de radiotéléphones mobiles présents dans cette cellule.

Selon les systèmes, le radiotéléphone mobile est parfois appelé station mobile, téléphone portable, terminal mobile ou encore terminal de radiocommunication. Par souci de simplification, on emploie, dans la suite de ce document de brevet, l'expression "radiotéléphone mobile".

Selon la technique SDMA, pour communiquer avec un radiotéléphone mobile, la station de base utilise un faisceau rayonnant radioélectrique de réception (et éventuellement un faisceau rayonnant radioélectrique d'émission), directif(s) et orientable(s) électroniquement, de façon à "suivre" le radiotéléphone mobile lors de son déplacement au sein de la cellule.

En cas de multiplexage temporel (ou TDMA, pour "Time Division Multiple Access" en anglais), le(s) faisceau(x) d'une même antenne est (sont) orienté(s) successivement (par exemple lors de chaque intervalle de temps) en direction de chacun des mobiles dont les communications sont multiplexées.

Préalablement au suivi du radiotéléphone mobile, la station de base doit avoir identifié la position de celui-ci, par exemple par une estimation de la direction d'arrivée de signaux constitutifs d'une séquence d'apprentissage émise par le radiotéléphone mobile (généralement lors de la phase d'initialisation d'appel).

On distingue deux types de faisceaux pouvant être formés par la station de base, à savoir le faisceau de réception, pour la voie montante de la communication (radiotéléphone mobile vers station de base), et le faisceau d'émission, pour la voie descendante de la communication (station de base vers radiotéléphone mobile).

Pour mettre en oeuvre la technique SDMA, les stations de base comprennent des antennes intelligentes à adaptation de faisceaux (ou "Adaptative Smart Antennas" en anglais), comprenant chacune un réseau d'éléments rayonnants répartis matriciellement sur un support (ou panneau). Classiquement, le réseau d'éléments rayonnants est composé d'une pluralité de colonnes d'éléments rayonnants, pilotée chacune indépendamment des autres et permettant de former un faisceau selon un azimut donné. En jouant, colonne par colonne, sur la phase et la puissance de chacun des éléments rayonnants, la station de base pilote l'antenne de façon que celle-ci génère un faisceau rayonnant radioélectrique directif, et orienté en azimut vers un radiotéléphone mobile donné. En d'autres termes, le diagramme de rayonnement de l'antenne est pointé (ou encore focalisé) sur le radiotéléphone mobile en communication.

Généralement, mais non obligatoirement, chaque station de base présente une configuration triangulaire à trois antennes intelligentes (c'est-à-dire à trois réseaux d'éléments rayonnants) couvrant chacune un secteur de 120° en azimut.

La technique SDMA présente de nombreux avantages, tels que notamment :
- une augmentation du gain des antennes (le gain se mesure généralement soit en terme de rapport signal à bruit, ce qui correspond au gain potentiel de couverture radio, soit en terme de rapport signal sur interférence (ou C/I, pour "Carrier/Interference" en anglais)) ;
- une réduction de la puissance d'émission des radiotéléphones mobiles ;
- une réduction de la puissance d'émission des stations de base ;
- une réduction du nombre de sites (et donc de stations de base) nécessaires pour couvrir une zone géographique de dimension donnée ;
- une réduction des interférences ;
- une réduction de la distance angulaire minimale de réutilisation d'une même fréquence ;
- une augmentation de la capacité de trafic ;
- une meilleure qualité radio, du fait du filtrage spatial opéré par les faisceaux étroits sur les multitrajets ;
- etc.

Il apparaît cependant que dans sa mise en oeuvre actuelle, la technique SDMA ne présente pas un fonctionnement optimal du fait que les antennes intelligentes sont commandées (par les stations de base) de façon à présenter une sélectivité uniquement en azimuth. En effet, comme on ne considère traditionnellement que le déplacement du mobile dans un plan horizontal, il suffit de connaître la position angulaire du mobile dans ce plan horizontal (c'est-à-dire l'azimut du mobile dans le plan horizontal contenant le panneau de l'antenne) pour pouvoir orienter correctement le faisceau de l'antenne en direction du mobile. En conséquence, du fait qu'elle n'est actuellement jamais contrôlée, l'ouverture verticale du faisceau présente une valeur fixe prédéterminée relativement grande, de façon que le mobile puisse être suivi par le faisceau de l'antenne, quelle que soit sa position verticale (c'est-à-dire quel que soit l'angle de site du mobile). On rappelle que l'angle de site du mobile est l'angle formé par la ligne reliant le mobile à l'antenne avec le plan horizontal contenant le panneau de l'antenne.

L'invention a notamment pour objectif de pallier ces différents inconvénients de l'état de la technique.

Plus précisément, l'un des objectifs de la présente invention est de fournir un procédé d'orientation de faisceau(x) rayonnant(s) radioélectrique(s) pour la communication entre une station de base et un radiotéléphone mobile, ce procédé permettant d'améliorer la focalisation du ou des faisceaux sur le radiotéléphone mobile.

L'invention a également pour objectif de fournir un tel procédé qui, du fait de l'amélioration de la focalisation du ou des faisceaux, permet d'améliorer encore les performances du système (augmentation du gain des antennes, réduction de la puissance d'émission des radiotéléphones mobiles et des stations de base, réduction du nombre de sites, réduction des interférences, réduction de la distance angulaire minimale de réutilisation d'une même fréquence, augmentation de la capacité de trafic, meilleure qualité radio, ...).

Un objectif complémentaire de l'invention est de fournir un tel procédé pouvant être mis en oeuvre, sans aucune modification matérielle, avec des antennes intelligentes existantes et des radiotéléphones mobiles existants.

Un autre objectif de l'invention est de fournir une station de base permettant la mise en oeuvre d'un tel procédé d'orientation de faisceau(x).

Ces différents objectifs, ainsi que d'autres qui apparaîtront par la suite, sont atteints selon l'invention à l'aide d'un procédé d'orientation de faisceau(x) rayonnant(s) radioélectrique(s) pour la communication entre une station de base et un radiotéléphone mobile, du type mettant en oeuvre une antenne de la station de base comprenant un réseau d'éléments rayonnants répartis matriciellement sur un support,
ledit procédé comprenant les étapes successives suivantes :
- la station de base effectue une identification de la position du mobile ;
- en fonction de l'identification précitée, la station de base oriente un faisceau de réception formé par ladite antenne, l'orientation dudit faisceau de réception étant réalisée à la fois en site et en azimut, au moyen d'une action sur les paramètres de réception de chacun des éléments rayonnants, différemment l'un par rapport à l'autre.

Le principe général de l'invention consiste donc à focaliser le(s) faisceau(x) en trois dimensions et non plus en deux dimensions. En effet, selon l'invention, on pointe le(s) faisceau(x) non seulement en azimut (c'est-à-dire dans le plan horizontal contenant le panneau de l'antenne), mais également en site (c'est-à-dire dans le plan vertical contenant la ligne reliant le mobile à l'antenne). En d'autres termes, on oriente le(s) faisceau(x) également vers le haut ou le bas, selon la position verticale du radiotéléphone mobile.

On notera qu'afin d'obtenir une sélectivité complémentaire selon l'angle de site, on agit indépendamment sur chacun des éléments rayonnants, et non plus colonne d'éléments par colonne d'éléments (comme dans l'art antérieur).

Cette sélectivité complémentaire selon l'angle de site permet d'améliorer la focalisation du ou des faisceaux. En effet, sans préjudice quant au suivi du mobile, elle autorise une forte réduction de l'ouverture verticale du ou des faisceau(x). Comme déjà expliqué ci-dessus, une telle amélioration de la focalisation du ou des faisceaux permet d'améliorer encore les performances du système (en termes de gain d'antennes, et/ou de puissance d'émission des radiotéléphones mobiles et des stations de base, et/ou de nombre de sites, et/ou d'interférences, etc.).

Il est clair que la précision de la focalisation reste par ailleurs proportionnelle au nombre d'éléments rayonnants que comprend l'antenne.

De façon avantageuse, ladite identification de la position du mobile consiste à identifier au moins un des paramètres de positionnement suivants :
- l'orientation angulaire, en site et en azimut, du radiotéléphone mobile par rapport à la station de base ;
- la distance du radiotéléphone mobile par rapport à la station de base.

Le paramètre de positionnement que constitue l'information d'orientation angulaire, en site et en azimut, est utilisé par la station de base pour orienter le faisceau formé par l'antenne.

Le paramètre de positionnement que constitue la distance est utilisé par la station de base pour calculer une information d'avance temporelle (ou TA, pour "Timing Advance" en anglais) propre au mobile et lui permettant de se caler sur l'intervalle de temps qui lui a été attribué, dans le cas d'un multiplexage temporel (ou TDMA).

Préférentiellement, ladite action sur les paramètres de réception des éléments rayonnants consiste à agir sur la phase et la puissance de chacun des éléments rayonnants.

Ainsi, chaque élément rayonnant du réseau d'antenne est associé à un couple (phase, amplitude) pouvant être représenté sous la forme d'un coefficient complexe. On notera que la sélectivité complémentaire selon l'angle de site peut être obtenue par l'introduction d'un gradient de phase selon l'un et/ou l'autre des deux axes d'alignement des éléments rayonnants. Le faisceau s'incline dans ce cas dans le sens du retard de phase.

Avantageusement, l'action sur les paramètres de réception des éléments rayonnants est fonction d'au moins un algorithme de combinaison de signaux.

De façon préférentielle, ledit au moins un algorithme de combinaison de signaux appartient au groupe comprenant : l'algorithme d'élimination d'interférence ; l'algorithme de maximisation du signal.

Préférentiellement, chacun desdits éléments rayonnants présente deux polarisations orthogonales.

Dans un premier mode de réalisation avantageux, lesdites deux polarisations orthogonales sont deux polarisations circulaires, droite et gauche respectivement.

Dans un second mode de réalisation avantageux, lesdites deux polarisations orthogonales sont deux polarisations rectilignes, à + 45° et - 45° respectivement.

De façon préférentielle, lesdites étapes d'identification de la position du mobile et d'orientation du faisceau de réception sont exécutées selon un processus itératif.

De cette façon, le faisceau "suit" en temps réel le mobile au cours de son déplacement au sein de la zone de couverture de l'antenne (par exemple dans un secteur d'un tiers de cellule, soit 120° en azimut, dans le cas d'une configuration de station de base triangulaire à trois antennes intelligentes).

Préférentiellement, ladite identification de la position du mobile comprend les étapes successives suivantes :
- le radiotéléphone mobile émet à destination de la station de base au moins une séquence d'apprentissage prédéterminée et connue de la station de base ;
- après réception de ladite au moins une séquence d'apprentissage, la station de base déduit par corrélation une direction d'arrivée, en site et en azimut, des signaux constitutifs de ladite séquence d'apprentissage.

Dans le cas du GSM, la séquence d'apprentissage est par exemple émise par le mobile à travers un canal de contrôle associé lent (ou SACCH, pour "Slow Associated Control CHannel" en anglais). D'une façon générale, l'adaptation du diagramme d'antenne peut se faire pendant et/ou après la phase d'établissement d'appel.

Dans un mode de réalisation particulier de l'invention, ledit procédé comprend en outre l'étape suivante :
- en fonction de l'identification précitée, la station de base oriente un faisceau d'émission formé par ladite antenne, l'orientation dudit faisceau d'émission étant réalisée à la fois en site et en azimut, au moyen d'une action sur les paramètres d'émission de chacun des éléments rayonnants, différemment l'un par rapport à l'autre.

Ainsi, l'antenne est dans ce cas utilisée en réception et en émission, grâce à deux faisceaux distincts, focalisés sur le mobile. Il est important de noter que l'action sur les paramètres (phase, amplitude) des éléments rayonnants n'est pas la même en réception et en émission, notamment du fait que les fréquences ne sont pas les mêmes sur les voies montante (mobile vers station de base) et descendante (station de base vers mobile).

De façon préférentielle, ladite action sur les paramètres d'émission de chacun des éléments rayonnants consiste à utiliser un jeu de paramètres d'émission choisi parmi au moins deux jeux de paramètres d'émission prédéterminés.

De cette façon, les paramètres d'émission ne sont pas obtenus par un calcul complet indépendant (qui serait long et complexe), mais sont déduits directement des paramètres de réception calculés préalablement (et donc d'un paramètre de positionnement du mobile identifié préalablement). Cette déduction des paramètres d'émission à utiliser consiste en un simple choix parmi plusieurs jeux de paramètres d'émission possibles.

Préférentiellement, ladite station de base et ledit radiotéléphone mobile sont compris dans un système de radiocommunication cellulaire appartenant au groupe comprenant : les systèmes UMTS ; les systèmes GSM 900 ; les systèmes DCS 1800 et les systèmes PCS 1900.

On notera que les résultats obtenus en GSM permettent d'espérer, dans le cas de l'UMTS, réutiliser une même fréquence (ou code) avec un écartement angulaire de l'ordre de 25° à 30° en azimut.

On notera également que dans le cas de l'UMTS, on tire parti de la fréquence relativement élevée du système (2 GHz) pour pointer vers la cellule une antenne très directive à grand gain.

L'invention concerne également une station de base d'un système de radiocommunication, du type comprenant au moins une antenne permettant la formation de faisceau(x) rayonnant(s) radioélectrique(s) pour la communication avec un radiotéléphone mobile, ladite antenne comprenant un réseau d'éléments rayonnants répartis matriciellement sur un support,
ladite station de base comprenant des moyens d'orientation d'un faisceau de réception formé par ladite antenne, en fonction d'une identification effectuée au préalable, l'orientation dudit faisceau de réception étant réalisée à la fois en site et en azimut, au moyen d'une action sur les paramètres de réception de chacun des éléments rayonnants, différemment l'un par rapport à l'autre.

Dans un mode de réalisation particulier de l'invention, ladite station de base comprend en outre des moyens d'orientation d'un faisceau d'émission formé par ladite antenne, en fonction de ladite identification effectuée au préalable, l'orientation dudit faisceau d'émission étant réalisée à la fois en site et en azimut, au moyen d'une action sur les paramètres d'émission de chacun des éléments rayonnants, différemment l'un par rapport à l'autre.

Avantageusement, ladite station de base comprend des moyens de traitement en bande de base, qui sont à proximité immédiate dudit réseau d'éléments rayonnants de l'antenne.

De cette façon, on évite la présence d'un câble coaxial (ou d'une fibre optique) entre les moyens de traitement en bande de base et les éléments rayonnants. Il convient en effet de rappeler que, selon l'art antérieur connu, les moyens de traitement en bande de base sont distants des éléments rayonnants et reliés à ceux-ci par un câble coaxial (ou une fibre optique).

De façon avantageuse, chaque élément rayonnant est relié, via des moyens d'amplification distincts, auxdits moyens de traitement en bande de base.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un organigramme simplifié d'un mode de réalisation particulier du procédé selon l'invention ;
- la figure 2 présente de façon plus détaillée l'étape d'identification apparaissant sur l'organigramme de la figure 1 ;
- la figure 3 présente un exemple d'orientation, en site et en azimut, d'un radiotéléphone mobile par rapport à une antenne intelligente ;
- la figure 4 présente une vue en coupe d'un exemple de faisceau obtenu par la mise en oeuvre du procédé selon l'invention ;
- la figure 5 présente un schéma simplifié d'une station de base selon l'invention ; et
- la figure 6 présente un schéma simplifié d'un mode de réalisation particulier du câblage entre eux de différents éléments apparaissant sur la figure 5.

L'invention concerne donc un procédé d'orientation de faisceau(x) rayonnant(s) radioélectrique(s) pour la communication entre une station de base et un radiotéléphone mobile. Plus précisément, il s'agit d'un procédé d'orientation d'un faisceau de réception, et éventuellement d'un faisceau d'émission, formé(s) par une antenne intelligente comprise dans la station de base avec laquelle communique le mobile.

On notera que la présente invention peut être mise en oeuvre quel que soit le nombre d'antenne intelligente que comprend la station de base. En effet, à chaque instant, la station de base communique avec le mobile via une seule antenne. Dans le cas où la station de base comprend plusieurs antennes, l'antenne choisie par la station de base pour communiquer avec le mobile est celle qui assure la couverture radio dans le secteur où se trouve le mobile. Par exemple, la station de base peut comprendre trois antennes intelligentes sectorisées, assurant chacune une couverture sur un secteur de 120° en azimut. Des techniques de gestion des transferts de communication intra-cellulaire (entre deux secteurs d'une même cellule) sont parfaitement connues de l'homme du métier et ne seront donc pas décrites dans la présente description. Dans la présente description, par "antenne mise en oeuvre dans le procédé selon l'invention", il convient donc d'entendre soit l'unique antenne de la station de base, soit celle qui, parmi une pluralité, assure la couverture radio dans le secteur où se trouve le mobile.

De façon classique, et comme expliqué plus en détail par la suite (en relation avec la figure 5), l'antenne intelligente comprend un réseau d'éléments rayonnants (ou modules d'émission/réception indépendants) répartis matriciellement sur un panneau.

Dans la suite de la description, on considère que l'antenne est utilisée en réception et en émission, et forme donc un faisceau de réception et un faisceau d'émission. Il est clair cependant que l'invention s'applique également dans le cas où l'antenne est utilisée uniquement en réception, et ne forme qu'un faisceau de réception.

Dans la suite de la description, on considère également le système de radiocommunication cellulaire auquel appartiennent la station de base et le radiotéléphone mobile est du type UMTS. On rappelle que l'UMTS est basé sur une modulation FDD-WCDMA (pour "Frequency Division Duplex - Wide band Code Division Multiple Access" en anglais) à 2 GHz. Il y a une émission régulière du mobile, ce qui permet à la station de base de détecter et préciser la présence de celui-ci.

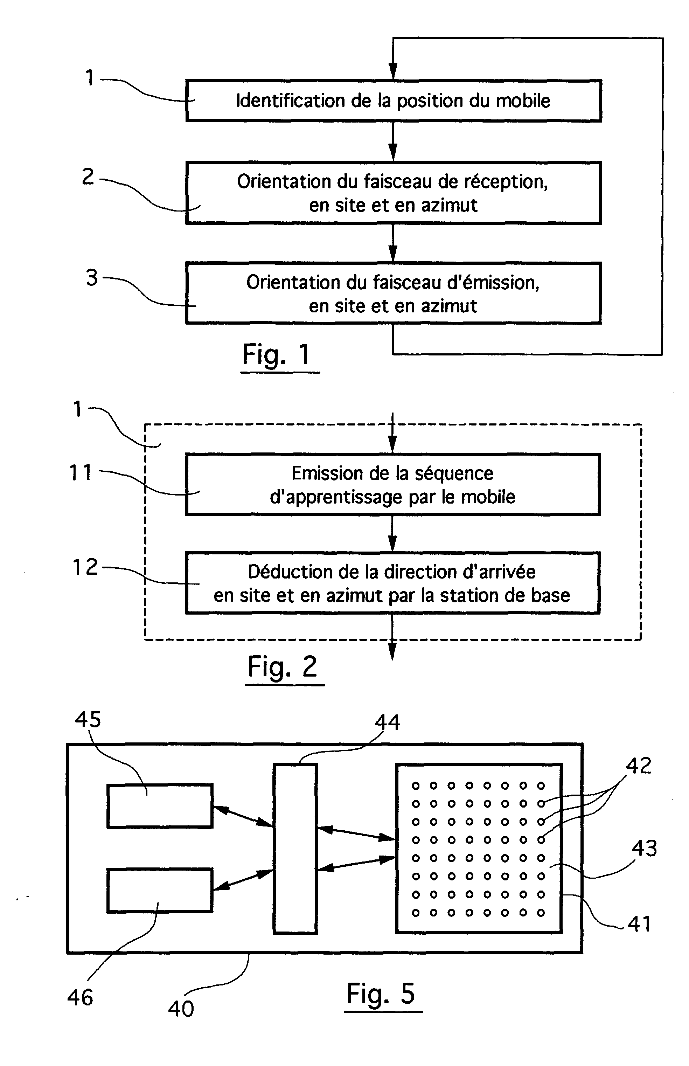

Comme présenté sur l'organigramme de la figure 1, dans un mode de réalisation particulier, le procédé selon l'invention comprend les étapes successives suivantes :
- la station de base effectue une identification (1) de la position du mobile ;
- en fonction de l'identification précitée, la station de base oriente (2), en site et en azimut, un faisceau de réception formé par l'antenne ;
- également en fonction de l'identification précitée, la station de base oriente (3), en site et en azimut, un faisceau d'émission formé par l'antenne.

Ces étapes 1 à 3 sont par exemple exécutées selon un processus itératif, de façon que la station de base puisse suivre le mobile en temps réel, lorsque celui-ci de déplace au sein de la zone géographique couverte par l'antenne.

L'étape 1 d'identification de la position du mobile consiste par exemple à identifier l'orientation angulaire, en site et en azimut, du radiotéléphone mobile par rapport à la station de base, ainsi que la distance du radiotéléphone mobile par rapport à la station de base.

Lors de sa première exécution, l'étape 1 d'identification de la position du mobile peut être basée sur l'utilisation d'une séquence d'apprentissage prédéterminée et connue de la station de base. Dans ce cas, comme présenté sur la figure 2, le radiotéléphone mobile commence par émettre (11) cette séquence d'apprentissage à destination de la station de base. Après réception de cette séquence d'apprentissage, la station de base déduit (12) une direction d'arrivée, en site et en azimut, des signaux constitutifs de la séquence d'apprentissage. Cette déduction résulte par exemple de l'exécution d'un algorithme d'estimation d'une direction d'arrivée, tel que MUSIC ("MUltiple SIgnal Classification"), ESPRIT ("Estimation of Signal Parameters via Rotational Invariance Techniques"), ML ("Maximum Likelihood"), WSF ("Weighted Subspace Fitting"), etc.

Cette première exécution de l'étape 1 d'identification se déroule par exemple lors d'une phase d'établissement d'appel. Selon une variante, on utilise, plusieurs itérations de l'étape 1 d'identification mettent chacune en oeuvre une séquence d'apprentissage (distincte ou non), de façon à améliorer l'estimation de la direction d'arrivée.

Lors des itérations suivantes de l'étape 1 d'identification (c'est-à-dire lorsque la direction d'arrivée a été estimée au moins une fois), les signaux émis par le mobile en cours de communication sont utilisés par la station de base (à la place de la séquence d'apprentissage) pour modifier dynamiquement l'estimation de la direction d'arrivée des signaux émis par le mobile.

L'étape 2 d'orientation, en site et en azimut, du faisceau de réception est réalisée au moyen d'une action sur les paramètres de réception, tels que la phase et la puissance, de chacun des éléments rayonnants, différemment l'un par rapport à l'autre.

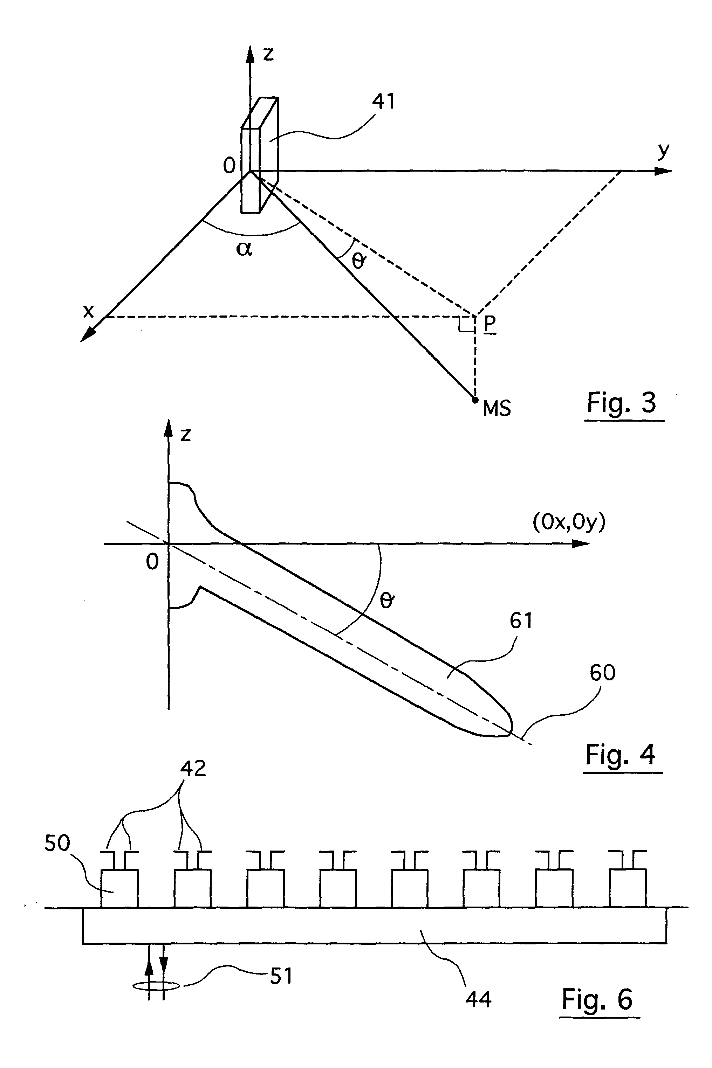

La figure 3 présente un exemple d'orientation d'un radiotéléphone mobile MS par rapport à une antenne intelligente 41. Dans cet exemple, on considère que l'antenne 41 se trouve au centre 0 du repère (Ox, Oy, Oz). Le radiotéléphone mobile MS présente un angle de site θ (mesuré par rapport au plan (Ox, Oy)) et un azimut α (mesuré par rapport à la direction Oz).

La figure 4 présente une vue en coupe, selon l'axe principal de rayonnement 60, d'un exemple de faisceau 61 obtenu par la mise en oeuvre du procédé selon l'invention. L'angle compris entre l'axe principal de rayonnement 60 et le plan (Ox, Oy) est l'angle de site θ.

En reprenant l'exemple précité, cette action sur les paramètres de réception dépend de la direction d'arrivée en site et en azimut. La détermination des valeurs à donner aux paramètres de réception (phase, amplitude) découle de l'exécution d'au moins un algorithme de combinaison de signaux, tel que l'algorithme d'élimination d'interférence (ou IRC, pour "Interference Rejection Combining" en anglais) et l'algorithme de maximisation du signal (ou MRC, pour "Maximum Ratio Combining" en anglais).

L'IRC vise à déterminer les coefficients complexes pondérateurs, c'est-à-dire les couples (phase, amplitude) des éléments rayonnants, de façon que le diagramme de l'antenne pointe le mobile en communication avec le maximum de gain, tout en annulant le diagramme dans les directions des interféreurs. Le MRC, qui est l'algorithme de diversité d'espace implémenté dans le GSM, apparaît moins performant en présence d'interférences. Il est clair toutefois qu'une combinaison de ces deux algorithmes peut être utilisée, de façon à cumuler leurs avantages respectifs.

L'étape 3 d'orientation, en site et en azimut, du faisceau d'émission est réalisée au moyen d'une action sur les paramètres d'émission, tels que la phase et la puissance, de chacun des éléments rayonnants, différemment l'un par rapport à l'autre.

On peut prévoir de "pré-programmer" différentes actions sur les paramètres d'émission, permettant chacune l'obtention d'une orientation distincte, en site et en azimut, du faisceau d'émission. Chaque action pré-programmée peut consister en un jeu de paramètres d'émission, stocké dans la station de base. C'est par exemple l'orientation angulaire estimée, en site et en azimut, lors de l'étape 1 d'identification qui détermine quel action pré-programmée doit être sélectionnée.

Par exemple, avec une centaine d'orientations distinctes du faisceau d'émission (chacune en site et en azimut), pour une antenne de 20 éléments rayonnants et couvrant un secteur d'une centaine de degrés en azimut, on obtient une précision de l'ordre de 10° en azimut et 15° en site. Une telle précision paraît suffisante dans la plupart des cas.

Cette centaine d'orientations distinctes du faisceau d'émission revient par exemple à couvrir un angle solide présentant une ouverture d'environ 100° en azimut et 60° en site (± 30° par rapport au plan horizontal contenant l'antenne intelligente).

On peut prévoir une étape supplémentaire (non représentée), permettant de situer l'orientation angulaire estimée dans une fourchette prédéterminée, de x degrés en site et y degrés en azimut (par exemple, x = 5 et y = 10). Chaque fourchette prédéterminée de l'orientation angulaire est par ailleurs associée à une action pré-programmée distincte. Ainsi, pour toutes les orientations angulaires estimées comprises dans une même fourchette, c'est la même action pré-programmée qui est effectuée, et conduit à la formation d'un même faisceau d'émission.

Selon une variante, on peut également prévoir une étape supplémentaire (non représentée) de transposition entre les paramètres de réception déjà évalués et les paramètres d'émission à évaluer. En d'autres termes, les paramètres d'émission sont déduits directement des paramètres de réception.

On présente maintenant, en relation avec les figures 5 et 6, un mode de réalisation particulier d'une station de base selon l'invention, permettant la mise en oeuvre du procédé discuté ci-dessus (en relation avec les figures 1 à 4).

Comme présenté sur le schéma simplifié de la figure 5, la station de base 40 comprend notamment, de façon classique, (au moins) une antenne intelligente 41 comprenant elle-même un réseau d'éléments rayonnants 42 répartis matriciellement sur un panneau 43.

Dans un mode de réalisation particulier de la présente invention, la station de base comprend en outre :
- des moyens 44 de traitement en bande de base ;
- des moyens 45 d'orientation, à la fois en site et en azimut, d'un faisceau de réception formé par l'antenne, en fonction d'une identification (étape référencée 1 sur la figure 1) effectuée au préalable ;
- des moyens 46 d'orientation, à la fois en site et en azimut, d'un faisceau d'émission formé par l'antenne, en fonction d'une identification (étape référencée 1 sur la figure 1) effectuée au préalable.

L'orientation du faisceau de réception, respectivement d'émission, est réalisée à la fois en site et en azimut au moyen d'une action sur les paramètres de réception, respectivement d'émission, (à savoir la phase et l'amplitude) de chacun des éléments rayonnants 42, différemment l'un par rapport à l'autre. Les moyens 45, 46 d'orientation comprennent par exemple un ou plusieurs processeurs de signaux numériques (DSP).

Chaque élément rayonnant 42 présente par exemple deux polarisations orthogonales. Pour cela, chaque élément rayonnant 42 comprend par exemple un disque plein avec deux connexions (ou points d'alimentation) reliés à un réseau déphaseur, de façon à présenter une polarisation circulaire droite/gauche. Selon une variante, moins compacte, chaque élément rayonnant 42 présente une double polarisation rectiligne +45°/-45°.

L'antenne 41 comprend un nombre d'éléments rayonnants 42 adapté à la focalisation recherchée.

Par exemple, avec un réseau de 8 x 8 éléments répartis sur un panneau d'environ 1 m², pour un fonctionnement à 2 GHz, la précision est de l'ordre de 10° (± 5°). De même, avec un réseau de 4 x 4 éléments répartis sur un panneau d'environ 0,25 m², pour un fonctionnement à 2 GHz, la précision est de l'ordre de 20° (± 10°) en azimut et 20° (± 10°) en site.

La suppression du lobe secondaire par calcul est de l'ordre de 15 dB.

La figure 6 présente un schéma simplifié d'un mode de réalisation particulier du câblage entre eux de différents éléments apparaissant sur la figure 5. Dans un souci de simplification, on a représenté une seule rangée d'éléments rayonnants 42.

Les moyens 44 de traitement en bande de base sont placés à proximité immédiate du réseau d'éléments rayonnants 42. Plus précisément, chaque élément rayonnant 42 est par exemple relié, via des moyens 50 d'amplification distincts, aux moyens 44 de traitement en bande de base. Il est possible de passer plusieurs porteuses à 5 MHz. Par ailleurs, la puissance injectée dans chaque élément rayonnant est par exemple de l'ordre du Watt

Sur la figure 6, on a également représenté la connexion 51 d'entrée/sortie en bande de base. Cette connexion 51 peut être réalisée, au choix, sur paire de cuivre (modem * DSL), sur fibre optique en bande de base, ...

Les moyens 44 de traitement en bande de base assurent une double réception UMTS, pour chacun des éléments rayonnants, consistant notamment à effectuer une démodulation de la RF en fréquence intermédiaire, ainsi qu'une extraction de la séquence d'apprentissage reçue. Le résultat du traitement en bande de base est transmis, via la connexion 51, aux moyens 45 d'orientation du faisceau de réception.

## Revendications

1. Procédé d'orientation de faisceau(x) rayonnant(s) radioélectrique(s) pour la communication entre une station de base (40) et un radiotéléphone mobile, du type mettant en oeuvre une antenne (41) de la station de base comprenant un réseau d'éléments rayonnants (42) répartis matriciellement sur un support,
caractérisé en ce qu'il comprend les étapes successives suivantes :
- la station de base effectue une identification (1) de la position du mobile ;
- en fonction de l'identification précitée, la station de base oriente (2) un faisceau de réception formé par ladite antenne, l'orientation dudit faisceau de réception étant réalisée à la fois en site et en azimut, au moyen d'une action sur les paramètres de réception de chacun des éléments rayonnants, différemment l'un par rapport à l'autre.

2. Procédé selon la revendication 1, caractérisé en ce que ladite identification (1) de la position du mobile consiste à identifier au moins un des paramètres de positionnement suivants :
- l'orientation angulaire, en site et en azimut, du radiotéléphone mobile par rapport à la station de base ;
- la distance du radiotéléphone mobile par rapport à la station de base.

3. Procédé selon l'une quelconque des revendications 1 et 2, caractérisé en ce que ladite action sur les paramètres de réception des éléments rayonnants consiste à agir sur la phase et la puissance de chacun des éléments rayonnants (42).

4. Procédé selon la revendication 3, caractérisé en ce que l'action sur les paramètres de réception des éléments rayonnants est fonction d'au moins un algorithme de combinaison de signaux.

5. Procédé selon la revendication 4, caractérisé en ce que ledit au moins un algorithme de combinaison de signaux appartient au groupe comprenant :
- l'algorithme d'élimination d'interférence ;
- l'algorithme de maximisation du signal.

6. Procédé selon l'une quelconque des revendications 1 à 5, caractérisé en ce que chacun desdits éléments rayonnants (42) présente deux polarisations orthogonales.

7. Procédé selon la revendication 6, caractérisé en ce que lesdites deux polarisations orthogonales sont deux polarisations circulaires, droite et gauche respectivement.

8. Procédé selon la revendication 6, caractérisé en ce que lesdites deux polarisations orthogonales sont deux polarisations rectilignes, à + 45° et - 45° respectivement.

9. Procédé selon l'une quelconque des revendications 1 à 8, caractérisé en ce que lesdites étapes d'identification (1) de la position du mobile et d'orientation (2) du faisceau de réception sont exécutées selon un processus itératif.

10. Procédé selon l'une quelconque des revendications 1 à 9, caractérisé en ce que ladite identification (1) de la position du mobile comprend les étapes successives suivantes :
- le radiotéléphone mobile émet (11) à destination de la station de base au moins une séquence d'apprentissage prédéterminée et connue de la station de base ;
- après réception de ladite au moins une séquence d'apprentissage, la station de base déduit (12) par corrélation une direction d'arrivée, en site et en azimut, des signaux constitutifs de ladite séquence d'apprentissage.

11. Procédé selon l'une quelconque des revendications 1 à 10, caractérisé en ce qu'il comprend en outre l'étape suivante :
- en fonction de l'identification précitée, la station de base oriente (3) un faisceau d'émission formé par ladite antenne, l'orientation dudit faisceau d'émission étant réalisée à la fois en site et en azimut, au moyen d'une action sur les paramètres d'émission de chacun des éléments rayonnants, différemment l'un par rapport à l'autre.

12. Procédé selon la revendication 11, caractérisé en ce que ladite action sur les paramètres d'émission de chacun des éléments rayonnants consiste à utiliser un jeu de paramètres d'émission choisi parmi au moins deux jeux de paramètres d'émission prédéterminés.

13. Procédé selon l'une quelconque des revendications 1 à 12, caractérisé en ce que ladite station de base et ledit radiotéléphone mobile sont compris dans un système de radiocommunication cellulaire appartenant au groupe comprenant :
- les systèmes UMTS ;
- les systèmes GSM 900 ;
- les systèmes DCS 1800 ;
- les systèmes PCS 1900.

14. Station de base (40) d'un système de radiocommunication, du type comprenant au moins une antenne (41) permettant la formation de faisceau(x) rayonnant(s) radioélectrique(s) pour la communication avec un radiotéléphone mobile, ladite antenne comprenant un réseau d'éléments rayonnants (42) répartis matriciellement sur un support,
caractérisée en ce qu'elle comprend des moyens (45) d'orientation d'un faisceau de réception formé par ladite antenne, en fonction d'une identification (1) effectuée au préalable, l'orientation dudit faisceau de réception étant réalisée à la fois en site et en azimut, au moyen d'une action sur les paramètres de réception de chacun des éléments rayonnants, différemment l'un par rapport à l'autre.

15. Station de base selon la revendication 14, caractérisée en ce qu'elle comprend en outre des moyens (46) d'orientation d'un faisceau d'émission formé par ladite antenne, en fonction de ladite identification (1) effectuée au préalable, l'orientation dudit faisceau d'émission étant réalisée à la fois en site et en azimut, au moyen d'une action sur les paramètres d'émission de chacun des éléments rayonnants, différemment l'un par rapport à l'autre.

16. Station de base selon l'une quelconque des revendications 14 et 15, caractérisée en ce qu'elle comprend des moyens (44) de traitement en bande de base, qui sont à proximité immédiate dudit réseau d'éléments rayonnants (42) de l'antenne.

17. Station de base selon la revendication 16, caractérisée en ce que chaque élément rayonnant (42) est relié, via des moyens (50) d'amplification distincts, auxdits moyens (44) de traitement en bande de base.
